# FASCICULE DE BREVET EUROPEEN

(11) **EP 1 664 588 B1**
(45) Date de publication et mention de la délivrance du brevet: **01.10.2008**
(21) Numéro de dépôt: 04816131.9
(22) Date de dépôt: 14.09.2004
(51) Int. Cl.: F16F 15/129, F16F 15/123

(54) **EMBRAYAGE A FRICTION, EN PARTICULIER POUR UN VEHICULE AUTOMOBILE, COMPORTANT DES MOYENS MULTIFONCTION**
REIBKUPPLUNG, INSBESONDERE FÜR KRAFTFAHRZEUG, MIT MEHRFUNKTIONSMITTEL
FRICTION CLUTCH, IN PARTICULAR FOR MOTOR VEHICLE, COMPRISING MULTIFUNCTIONAL MEANS

(30) Priorité: 16.09.2003 FR 0350551
(43) Date de publication de la demande: 07.06.2006
(73) Titulaire: Valeo Embrayages, 80009 Amiens (FR)
(72) Inventeur: BOUDIN, Jérôme, F-80000 AMIENS (FR); CAUMARTIN, Laurent, F-80600 BEAUQUESNE (FR)
(86) Numéro de dépôt international: PCT/FR2004/050431
(87) Numéro de publication internationale: WO 2005/026575

(56) Documents cités:
- FR-A- 2 689 191
- FR-A- 2 801 081
- US-A- 5 240 458

## Description

La présente invention concerne un embrayage à friction, en particulier pour un véhicule automobile, comportant des moyens multifonction.

Dans un véhicule automobile, un embrayage à friction à pour fonction de transmettre un couple entre un élément rotatif d'entrée et un élément rotatif de sortie, par pincement de la friction entre un plateau de pression et un volant moteur, ainsi que d'assurer la continuité de ce couple et de filtrer les vibrations en provenance du moteur.

En général, l'élément d'entrée est formé par un disque de friction et l'élément de sortie est formé par un moyeu destiné notamment à être couplé à un arbre d'entrée de boîte de vitesses.

On connaît déjà dans l'état de la technique, notamment d'après FR-A-2 689 191 (FR-92 03638), un embrayage à friction, en particulier pour véhicule automobile, du type comportant deux amortisseurs couplés en série, appelés pré-amortisseur et amortisseur principal, muni chacun d'éléments rotatifs d'entrée et de sortie, l'élément de sortie de l'amortisseur principal formant l'élément d'entrée du pré-amortisseur, chacun des deux amortisseurs comportant deux rondelles de guidage solidaires en rotation d'un premier élément choisi parmi ses éléments d'entrée et de sortie, un voile solidaire en rotation du second de ces éléments, des moyens de frottement sollicités par déplacement angulaire relatif du voile et des rondelles de guidage, le pré-amortisseur comportant de plus des moyens multifonction assurant les deux fonctions suivantes :
- centrage des rondelles de guidage du pré-amortisseur par rapport à son élément d'entrée ;
- solidarisation en rotation de l'élément d'entrée du pré-amortisseur avec les rondelles de guidage de ce pré-amortisseur ;

Dans ce document, les moyens multifonction sont formés par des pions liant les rondelles de guidage avec l'élément de sortie de l'amortisseur, et assurant les deux fonctions de centrage et de solidarisation en rotation.

Le montage de ces pions est réalisé habituellement au cours d'une opération relativement complexe et longue.

L'invention a notamment pour but de remédier à ce problème en fournissant un embrayage à friction muni de moyens multifonctions susceptibles d'être assemblés facilement et rapidement, ceci en réduisant autant que possible le nombre de pièces de l'embrayage.

A cet effet, l'invention a pour objet un embrayage à friction, en particulier pour véhicule automobile, du type précité, caractérisé en ce que les moyens multifonction sont formés par un organe multifonction assurant de plus au moins l'une des fonctions suivantes :
- guidage en rotation de l'élément de sortie du pré-amortisseur par rapport à son élément d'entrée ;
- frottement pour les moyens de frottement du pré-amortisseur.

Du fait qu'un seul et même organe multifonction assure plusieurs fonctions, le montage et la structure de l'embrayage sont simplifiés.

De préférence, l'organe multifonction a une forme générale annulaire sensiblement coaxiale aux éléments d'entrée et de sortie du pré-amortisseur.

Ainsi, l'organe multifonction a une structure simple et permet le montage de différents éléments de l'embrayage par emboîtement sur cet organe multifonction. De plus, l'organe multifonction de forme générale annulaire permet de limiter l'encombrement de l'embrayage.

Suivant d'autres caractéristiques optionnelles de cet embrayage à friction :
- l'organe multifonction est muni d'une première extrémité, en contact avec le voile du pré-amortisseur, délimitée par une face de frottement avec ce voile ;
- la première extrémité de l'organe multifonction est disposée axialement entre les deux rondelles de guidage du pré-amortisseur ;
- les éléments d'entrée et de sortie ont des formes générales annulaires formant respectivement des moyeux externe et interne, sensiblement coaxiaux, entre lesquels est intercalé radialement l'organe multifonction pour réaliser le centrage de l'élément de sortie du pré-amortisseur par rapport à son élément d'entrée ;
- au moins une des rondelles de guidage et l'élément d'entrée comportent des contours internes de solidarisation en rotation coopérant avec des contours externes complémentaires de l'organe multifonction ;
- le contour de l'organe multifonction pour la solidarisation en rotation avec l'élément d'entrée s'étend axialement à l'extérieur de l'espace compris entre les deux rondelles de guidage du pré-amortisseur ;
- l'organe multifonction et l'élément de sortie du pré-amortisseur sont délimitées par des surfaces complémentaires formant palier, respectivement interne et externe, pour assurer le guidage en rotation de cet élément de sortie du pré-amortisseur par rapport à l'élément d'entrée du pré-amortisseur solidaire en rotation de l'organe multifonction ;
- l'organe d'entrée du pré-amortisseur comprend une extrémité opposée axialement à l'organe multifonction couplée en rotation, par exemple par crabotage, avec une bague de guidage en rotation de l'élément de sortie du pré-amortisseur par rapport à l'élément d'entrée du pré-amortisseur ;
- chaque amortisseur comporte des organes élastiques à effet circonférentiel logés dans des fenêtres ménagées dans les rondelles de guidage et le voile, et au moins un des organes élastiques est logé avec un jeu circonférentiel dans une fenêtre correspondante du voile, de manière à constituer des premier et second étages d'amortissement ;
- les moyens de frottement de chaque amortisseur comportent une rondelle de frottement munie de deux pattes qui, lorsque l'organe élastique à jeu circonférentiel est au repos, sont chacune liée angulairement avec une extrémité de cet organe élastique à jeu circonférentiel, de façon à ce que cette rondelle de frottement soit entraînée en rotation lorsque le second étage d'amortissement est activé ;
- chaque patte de la rondelle de frottement du pré-amortisseur interdit tout contact direct du voile du pré-amortisseur avec l'extrémité de l'organe élastique avec laquelle la patte est liée angulairement ;
- les moyens de frottement de l'amortisseur principal comprennent au moins une rondelle de frottement plane, munie de pattes de solidarisation en rotation avec l'élément de sortie de l'amortisseur principal prolongeant radialement le contour interne de cette rondelle plane ;
- la rondelle de frottement plane est en contact avec le voile de l'amortisseur principal, et est délimitée par une face de frottement avec ce voile ;
- la rondelle de frottement plane est en contact avec la rondelle de frottement à pattes, et est délimitée par une face qui est en contact de frottement avec cette rondelle à pattes lorsque le second étage d'amortissement de l'amortisseur principal est activé ;
- les deux rondelles de guidage de l'amortisseur principal sont solidaires de l'élément de sortie de cet amortisseur principal, les deux rondelles de guidage du pré-amortisseur étant disposées axialement à l'extérieur de l'espace compris entre les deux rondelles de guidage de l'amortisseur principal ;
- l'embrayage à friction comporte une rondelle élastique intercalée axialement entre le pré-amortisseur et l'amortisseur principal, susceptible d'appliquer une charge sollicitant l'organe multifonction en appui frottant contre le voile du pré-amortisseur, et participant au positionnement axial de l'amortisseur principal ;
- la rondelle élastique entoure l'élément de sortie du pré-amortisseur et rappelle élastiquement axialement l'élément de sortie de l'amortisseur principal en appui, directement ou indirectement, contre une butée de positionnement axial de cet élément de sortie de l'amortisseur principal ;
- la rondelle élastique est munie de moyens de solidarisation en rotation avec l'organe multifonction.

L'invention sera mieux comprise à la lecture de la description qui va suivre, donnée uniquement à titre d'exemple et faite en se référant aux dessins annexés dans lesquels :

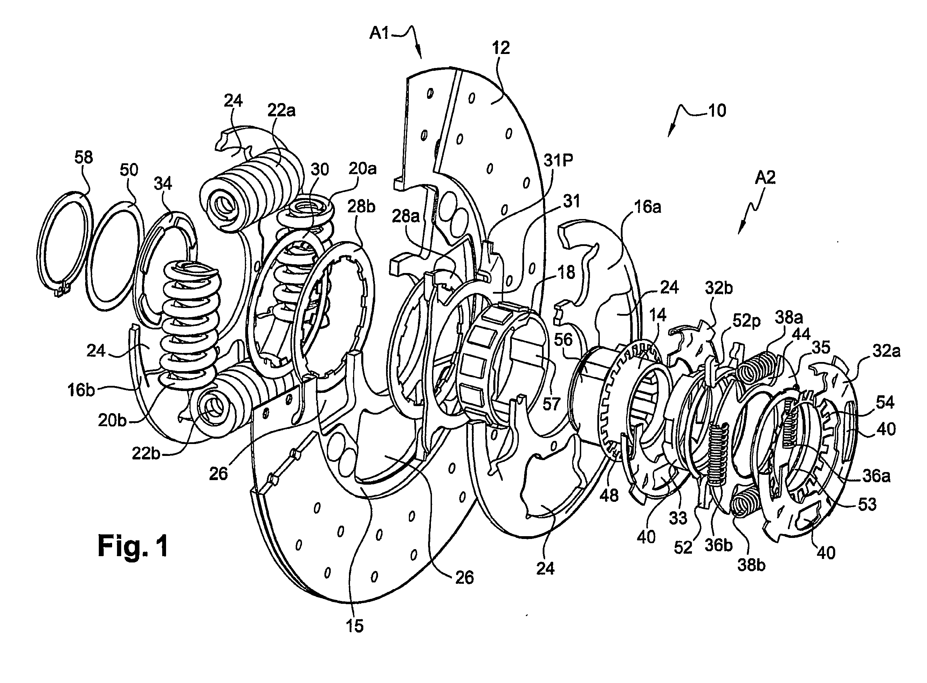

- la figure 1 est une vue en perspective éclatée d'un embrayage selon l'invention ;

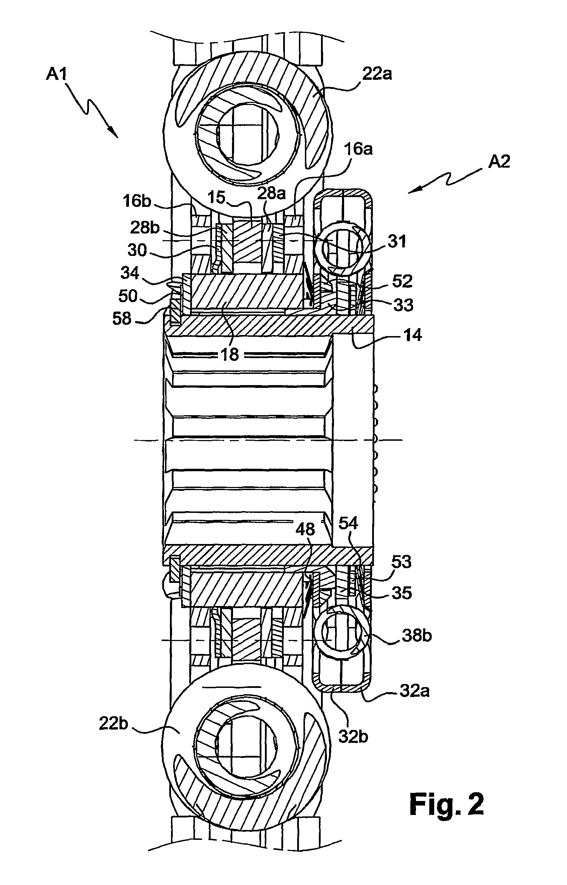

- la figure 2 est une vue en coupe axiale de l'embrayage de la figure 1.

On a représenté sur les figures un embrayage à friction selon l'invention. Dans l'exemple décrit l'embrayage est destiné à un véhicule automobile.

L'embrayage à friction comprend un dispositif à friction 10, destiné à transmettre un couple entre un volant moteur solidaire en rotation d'un arbre menant, tel que le vilebrequin d'un moteur à combustion interne, et un arbre mené tel que l'arbre d'entrée d'une boîte de vitesses.

Le dispositif à friction 10 est muni de moyens d'amortissement comportant un amortisseur principal A1 et un pré-amortisseur A2. Ces amortisseurs A1, A2 sont couplés en série entre un élément rotatif d'entrée générale, tel qu'un disque de friction 12, et un élément rotatif de sortie générale, tel qu'un moyeu interne 14, de forme générale annulaire, ces éléments d'entrée et de sortie étant sensiblement coaxiaux.

De façon connue, le disque de friction 12 est destiné à être serré entre le volant moteur et un plateau de pression actionné par des moyens embrayeurs. Le moyeu interne 14 comprend des cannelures longitudinales internes permettant de le solidariser en rotation avec une extrémité de l'arbre mené.

Chaque amortisseur A1, A2 est muni d'éléments rotatifs d'entrée et de sortie, un couple entrant par l'élément d'entrée étant transmis à l'élément de sortie après amortissement.

L'élément d'entrée de l'amortisseur principal A1 est l'élément d'entrée générale du dispositif à friction 10, c'est à dire le disque de friction 12. Ce disque de friction 12 est fixé sur un voile 15 de l'amortisseur principal A1, par exemple au moyen de rivets.

Ce voile 15 est agencé entre deux rondelles de guidage 16a et 16b de l'amortisseur principal A1, co-axialement à celles-ci. Ces rondelles de guidage 16a, 16b sont solidarisées en rotation, par exemple par soudage, avec un moyeu externe 18 qui fait office d'élément de sortie de l'amortisseur principal A1.

Ce moyeu externe 18 est de forme annulaire et est sensiblement coaxial au moyeu interne 14.

Des organes élastiques à action circonférentielle, tels que des ressorts hélicoïdaux 20a, 20b, 22a, 22b, de forte raideur, sont logés dans des fenêtres 24 des rondelles de guidage 16a et 16b et dans des fenêtres 26 du voile annulaire 15. Les organes élastiques 20a, 20b sont répartis par exemple ici en deux groupes. Les organes élastiques 20a, 20b d'un premier groupe sont logés sans jeu circonférentiel dans les fenêtres 24, 26 précités et participent à la transmission d'un couple de rotation entre les rondelles de guidage 16a, 16b et le voile 15 dès le début d'une rotation relative entre le disque de friction 12 et le moyeu externe 18. Les organes élastiques 22a, 22b d'un second groupe sont logés sans jeu circonférentiel dans les fenêtres 24 des rondelles de guidage 16a, 16b et avec un jeu circonférentiel prédéterminé dans les fenêtres 26 du voile annulaire 15, et ne participent à la transmission d'un couple de rotation que lorsque le débattement angulaire entre les rondelles de guidage 16a, 16b et le voile annulaire 15 dépasse une valeur prédéterminée, à partir d'une position de repos, correspondant au jeu circonférentiel entre les organes élastiques 22a, 22b et les fenêtres 26 du voile 15.

Ainsi les organes élastiques 20a, 20b du premier groupe transmettent le couple en permanence, et ceux 22a, 22b du second groupe le transmettent uniquement quand le déplacement angulaire entre les rondelles de guidage 16a, 16b et voile annulaire 15 est supérieure à ladite valeur prédéterminée. L'amortissement des vibrations et irrégularités de couple est ainsi étagé en deux étages d'amortissement, les organes élastiques du second groupe n'intervenant que quand le débattement angulaire entre les rondelles de guidage 16a, 16b et le voile annulaire 15 dépasse la valeur prédéterminée.

Lorsque le premier étage d'amortissement de l'amortisseur principal A1 est activé, le disque de friction 12 entraîne en rotation le voile 15. Ses fenêtres 26 entraînent donc en rotation les organes élastiques 20a, 20b qui y sont montées sans jeu. Les organes élastiques 20a, 20b entraînent alors en rotation les rondelles de guidage 16a, 16b, avec un déphasage dépendant de la raideur de ces organes élastiques 20a, 20b. Le moyeu externe 18, solidaire des rondelles de guidage 16a, 16b, est lui aussi entraîné en rotation.

Parallèlement à l'activation des organes élastiques, des moyens de frottement sont mis en oeuvre lorsque ce premier étage d'amortissement de l'amortisseur principal A1 est activé. L'amortisseur principal A1 comporte en effet des rondelles de frottement planes 28a, 28b, munies de pattes prolongeant radialement le contour interne de ces rondelles planes, destinées à coopérer avec des dents extérieures du moyeu externe 18 pour solidariser en rotation les rondelles 28a, 28b avec le moyeu 18.

Ces rondelles de frottement planes 28a, 28b sont en contact avec le voile 15 de l'amortisseur principal A1, et forment des faces de frottement avec ce voile 15, l'effort de serrage entre les rondelles de frottement 28a, 28b étant assuré par une rondelle élastique 30 par exemple Belleville ou ondulée, intercalée axialement entre la rondelle de guidage 16b et la rondelle de frottement 28b.

Lorsque le débattement angulaire entre les rondelles de guidage 16a, 16b et le voile annulaire 15 dépasse la valeur prédéterminée à partir de la position de repos, le second étage d'amortissement de l'amortisseur principal A1 est activé.

Les organes élastiques 22a, 22b sont alors eux aussi entraînés en rotation par le voile 15, et leurs raideurs s'ajoutent donc aux raideurs des organes élastiques 20a, 20b dans la contribution au déphasage entre les rondelles de guidage 16a, 16b et le voile 15.

L'amortisseur principal A1 comporte de plus une rondelle de frottement 31, munie de deux paires de pattes 31 P. Les pattes 31 P d'une paire sont liées angulairement avec les extrémités d'un organe élastique 22a, 22b correspondant lorsque celui ci est au repos.

Chaque patte de la rondelle de frottement 31 est susceptible de coopérer avec la surface interne de la fenêtre 26 correspondante, de façon que cette rondelle de frottement 31 soit entraînée en rotation lorsque le second étage d'amortissement de l'amortisseur principal A1 est activé.

Cette rondelle à pattes 31 est intercalée entre la rondelle de guidage 16a et la rondelle de frottement plane 28a, de manière à former avec ces deux rondelles deux faces de frottement supplémentaires.

Ces deux étages d'amortissement de l'amortisseur principal A1 forment les troisième et quatrième étages d'amortissement du dispositif à friction 10, les deux premiers étages d'amortissement du dispositif à friction 10 étant assurés par le pré-amortisseur A2.

Le pré-amortisseur A2 forme une liaison entre le moyeu externe 18 et le moyeu interne 14. On notera donc que l'élément d'entrée du pré-amortisseur A2 est l'élément de sortie de l'amortisseur principal A1, et que l'élément de sortie du pré-amortisseur A2 est l'élément de sortie générale du dispositif à friction 10.

Ce pré-amortisseur A2 comprend des première et seconde rondelles de guidage 32a, 32b, disposées axialement à l'extérieur de l'espace compris entre les deux rondelles de guidage de l'amortisseur principal A1.

Une des rondelles de guidage 32a, 32b comporte des contours internes de solidarisation en rotation coopérant avec une première partie complémentaire du contour externe d'un organe multifonction 33, les rondelles de guidage du pré-amortisseur étant assemblées par exemple ici à l'aide de pattes à leur périphérie, par un procédé de soudure par brasage.

Cet organe multifonction 33 a une forme générale annulaire sensiblement coaxiale au moyeu externe 18 et au moyeu interne 14, et est intercalé radialement entre ces deux moyeux de manière à réaliser le centrage du moyeu interne 14 par rapport au moyeu externe 18. Ce centrage est complété par une bague 34 de centrage et de guidage en rotation du moyeu externe 18 par rapport au moyeu interne 14, cette bague 34 étant couplée en rotation, par exemple par crabotage, avec une extrémité du moyeu externe 18 opposée axialement à l'organe multifonction 33.

Par ailleurs, le moyeu externe 18 comporte un contour interne de solidarisation en rotation coopérant avec une seconde partie complémentaire du contour externe de l'organe multifonction 33 qui a la même forme que la première partie de ce contour.

On notera donc que les rondelles de guidage 32a, 32b sont solidaires en rotation avec le moyeu externe 18, puisque ces éléments sont tous solidaires en rotation de l'organe multifonction 33.

La seconde partie du contour externe de l'organe multifonction 33 s'étend axialement à l'extérieur de l'espace compris entre les deux rondelles de guidage 32a, 32b du pré-amortisseur A2.

Par ailleurs, l'organe multifonction 33 et le moyeu interne 14 sont délimités par des surfaces complémentaires formant palier, respectivement interne et externe, pour assurer avec la bague 34 le guidage en rotation de ce moyeu interne 14 par rapport au moyeu externe 18, solidaire en rotation de l'organe multifonction 33.

Le pré-amortisseur A2 comporte de plus un voile annulaire 35 agencé entre ces rondelles de guidage 32a, 32b et solidaire en rotation avec le moyeu interne 14, auquel il est par exemple monté fretté

Des organes élastiques à action circonférentielle, tels que des ressorts hélicoïdaux 36a, 36b, 38a, 38b, de raideurs relativement faibles, sont logés dans des fenêtres 40 des rondelles de guidage 32a, 32b et dans des fenêtres 44 du voile 35.

De manière analogue à l'amortisseur principal A1, les organes élastiques 36a, 36b, 38a, 38b sont répartis par exemple ici en deux groupes.

Ainsi, les organes élastiques 36a, 36b du premier groupe sont montés sans jeu circonférentiel dans les fenêtres 40 des rondelles de guidage 32a, 32b et les fenêtres 44 du voile 35, et participent à la transmission d'un couple dès le début d'une rotation relative du moyeu externe 18 par rapport au moyeu interne 14. Par contre, les organes élastiques 38a, 38b du second groupe sont montés sans jeu circonférentiel dans les fenêtres 40 des rondelles de guidage 32a, 32b, mais avec un jeu circonférentiel prédéterminé dans les fenêtres du voile annulaire 35 du pré-amortisseur A2. Ces organes élastiques 38a, 38b du second groupe ne participent donc à la transmission d'un couple de rotation que lorsque le débattement angulaire entre le voile 35 et les rondelles de guidage 32a, 32b est supérieur au jeu circonférentiel précité.

Ainsi, de même que l'amortisseur principal A1, le pré-amortisseur A2 comporte deux étages d'amortissement.

Lorsque le premier étage d'amortissement du pré-amortisseur A2 est activé, le moyeu externe 18 entraîne en rotation les rondelles de guidage 32a, 32b. Les fenêtres 40 entraînent donc en rotation les organes élastiques 36a, 36b qui y sont montées sans jeu. Les organes élastiques 36a, 36b entraînent alors en rotation le voile 35, avec un déphasage dépendant de la raideur de ces organes élastiques 36a, 36b. Le moyeu interne 14, solidaire du voile 35, est lui aussi entraîné en rotation.

Parallèlement à l'activation des organes élastiques 36a, 36b, des moyens de frottement sont mis en oeuvre lorsque ce premier étage d'amortissement du pré-amortisseur A2 est activé. L'organe multifonction 33 participe en effet aux frottements lorsque le premier étage du pré-amortisseur A2 est activé. En effet, l'organe multifonction 33 est solidaire en rotation avec les rondelles de guidage 32a, 32b, et est en contact avec le voile 35 du pré-amortisseur A2. Une rondelle élastique 48, intercalée axialement entre le pré-amortisseur A2 et l'amortisseur principal A1, applique une charge, notamment par l'intermédiaire de la rondelles de guidage 32b, sollicitant l'organe multifonction 33 en appui contre le voile 35 du pré-amortisseur A2. Cette charge assure alors le contact de l'organe multifonction 33 sur le voile 35, ce qui assure de même le frottement.

Cette rondelle élastique 48 est munie par exemple ici de moyens de solidarisation en rotation avec l'organe multifonction 33, constitués de pattes susceptibles de coopérer avec le contour externe de l'organe multifonction 33.

Une autre face de frottement est formée entre la bague de guidage en rotation 34 solidaire en rotation du palier externe 18, et une rondelle de frottement 50.

Lorsque le débattement angulaire entre les rondelles de guidage 32a, 32b et le voile annulaire 35 dépasse une valeur limite à partir d'une position de repos, le second étage d'amortissement du pré-amortisseur A2 est activé.

Les organes élastiques 38a, 38b entraînent alors eux aussi en rotation le voile 35, et leurs raideurs s'ajoutent donc aux raideurs des organes élastiques 36a, 36b dans la contribution au déphasage entre les rondelles de guidage 32a, 32b et le voile 35.

Le pré-amortisseur A2 comporte de plus une rondelle de frottement 52, munie de deux paires de pattes 52P. Les pattes 52P d'une paire sont liées angulairement avec les extrémités d'un organe élastique 38a, 38b lorsque celui ci est au repos.

Chaque patte de la rondelle de frottement 52 est susceptible de coopérer avec la surface interne de la fenêtre 44 correspondante, de façon que cette rondelle de frottement 52, d'une part, soit entraînée en rotation lorsque le second étage d'amortissement du pré-amortisseur A2 est activé, et d'autre part, interdise tout contact direct du voile 35 avec l'extrémité de l'organe élastique 38a, 38b avec laquelle la patte 52P est en prise.

Cette rondelle à pattes 52 est intercalée entre la rondelle de guidage 32b et le voile 35 du pré-amortisseur A2, de manière à former avec la rondelle de guidage 32b une première face de frottement.

Le pré-amortisseur A2 comporte de plus une rondelle de frottement plane 53, cette rondelle étant solidaires en rotation de la rondelle à pattes 52, la rondelle plane 53 étant munie d'une encoche coopérant avec une saillie complémentaire de la rondelle à pattes 52.

Ainsi, lorsque le second étage d'amortissement du pré-amortisseur A2 est activé, la rondelle à pattes 52 qui est entraînée en rotation avec le voile 35, entraîne avec elle la rondelle de frottement 53. Cette rondelle de frottement 53 est en contact avec une rondelle élastique 54. La rondelle élastique 54 est munie de pattes de solidarisation avec la rondelle de guidage 32a. Les rondelles de frottement 53 et élastique 54 n'ont donc pas la même vitesse de rotation et forment donc ensemble une ligne de frottement.

Les deux étages d'amortissement du pré-amortisseur A2 s'ajoutent aux deux étages d'amortissement de l'amortisseur principal A1, de manière à former quatre étages d'amortissement.

En cas de faible débattement angulaire entre l'élément d'entrée 12 et l'élément de sortie 14 du dispositif à friction 10, le premier étage du pré-amortisseur A2, dont les organes élastiques 36a, 36b, 38a, 38b sont de faible raideur, est activé.

Comme décrit précédemment, le second étage d'amortissement du pré-amortisseur A2 est ensuite activé lorsque le débattement angulaire entre l'élément d'entrée 12 et l'élément de sortie 14 du dispositif à friction 10 dépasse un certain seuil.

Lorsqu'on arrive en fin du second étage d'amortissement du pré-amortisseur A2, des bossages extérieurs 56 du moyeu interne 14 viennent en contact avec des bossages intérieurs 57 du contour interne du moyeu externe 18, de manière à ce que le couple passe directement entre le moyeu interne 14 et le moyeu externe 18. Le pré-amortisseur A2 n'intervient donc plus dans la transmission de couple, et les premier et second étage de l'amortisseur principal A1 sont ensuite respectivement activés.

En plus de remplir les différentes fonctions décrites précédemment, l'organe multifonction 33 facilite le montage du dispositif à friction 10.

En effet, tout d'abord, le voile 35 est fretté par exemple ici sur le moyeu interne 14. Puis, les éléments composant le pré-amortisseur A2 sont montés de part et d'autre du voile 35 et autour du moyeu interne 14, une première extrémité de l'organe multifonction 33 étant disposée axialement entre les deux rondelles de guidage du pré-amortisseur A2.

La seconde extrémité de l'organe multifonction 33 s'étend axialement à l'extérieur de l'espace compris entre les deux rondelles de guidage du pré-amortisseur A2, ce qui permet au moyeu externe 18, sur lequel est monté l'amortisseur principal A1, de venir s'emboîter sur cette seconde extrémité.

La rondelle élastique 48, entourant l'organe multifonction, participe au positionnement axial de l'amortisseur principal A1. En effet, cette rondelle élastique 48 rappelle axialement le moyeu externe 18 en appui indirect via la rondelle de frottement 50 contre une butée de positionnement axial de ce moyeu externe 18, constituée d'un circlip 58.

Selon une variante non représentée, le moyeu externe 18 peut être en appui direct contre le circlip 58.

## Revendications

1. Embrayage à friction, en particulier pour véhicule automobile, du type comportant deux amortisseurs (A1, A2) couplés en série, appelés pré-amortisseur (A2) et amortisseur principal (A1), muni chacun d'éléments rotatifs d'entrée (12, 18) et de sortie (18, 14), l'élément de sortie (18) de l'amortisseur principal (A1) formant l'élément d'entrée (18) du pré-amortisseur (A2), chacun des deux amortisseurs comportant deux rondelles de guidage (16a, 16b, 32a, 32b) solidaires en rotation d'un premier élément choisi parmi ses éléments d'entrée (12, 18) et de sortie (18 , 14), un voile (15, 35) solidaire en rotation du second de ces éléments, des moyens de frottement (52 , 31, 28a, 28b, 33) sollicités par déplacement angulaire relatif du voile (15 , 35) et des rondelles de guidage (16a, 16b, 32a, 32b), le pré-amortisseur (A2) comportant de plus des moyens multifonction assurant les deux fonctions suivantes :
- centrage des rondelles de guidage (32a, 32b) du pré-amortisseur (A2) par rapport à son élément d'entrée (18),
- solidarisation en rotation de l'élément d'entrée (18) du pré-amortisseur (A2) avec les rondelles de guidage (32a, 32b) de ce pré-amortisseur (A2),
**caractérisé en ce que** les moyens multifonction sont formés par un organe multifonction (33) assurant de plus au moins l'une des fonctions suivantes :
- guidage en rotation de l'élément de sortie (14) du pré-amortisseur (A2) par rapport à son élément d'entrée (18),
- frottement pour les moyens de frottement du pré-amortisseur (A2).

2. Embrayage à friction selon la revendication 1, **caractérisé en ce que** l'organe multifonction (33) a une forme générale annulaire sensiblement coaxiale aux éléments d'entrée (18) et de sortie (14) du pré-amortisseur (A2).

3. Embrayage à friction selon la revendication 2, **caractérisé en ce que** l'organe multifonction (33) est muni d'une première extrémité, en contact avec le voile (35) du pré-amortisseur (A2), délimitée par une face de frottement avec ce voile (35).

4. Embrayage à friction selon la revendication 3, **caractérisé en ce que** la première extrémité de l'organe multifonction (33) est disposée axialement entre les deux rondelles de guidage (32a, 32b) du pré-amortisseur (A2).

5. Embrayage à friction selon l'une quelconque des revendications 2 à 4, **caractérisé en ce que** les éléments d'entrée (18) et de sortie (14) ont des formes générales annulaires formant respectivement des moyeux externe (18) et interne (14), sensiblement coaxiaux, entre lesquels est intercalé radialement l'organe multifonction (33) pour réaliser le centrage de l'élément de sortie (14) du pré-amortisseur (A2) par rapport à son élément d'entrée (18).

6. Embrayage à friction selon l'une quelconque des revendications 2 à 5, **caractérisé en ce qu'**au moins une des rondelles de guidage (32a, 32b) et l'élément d'entrée (18) comportent des contours internes de solidarisation en rotation coopérant avec des contours externes complémentaires de l'organe multifonction (33).

7. Embrayage à friction selon la revendication 6, **caractérisé en ce que** le contour de l'organe multifonction (33) pour la solidarisation en rotation avec l'élément d'entrée (18) s'étend axialement à l'extérieur de l'espace compris entre les deux rondelles de guidage (32a, 32b) du pré-amortisseur (A2).

8. Embrayage à friction selon la revendication 6 ou 7, **caractérisé en ce que** l'organe multifonction (33) et l'élément de sortie (14) du pré-amortisseur (A2) sont délimitées par des surfaces complémentaires formant palier, respectivement interne et externe, pour assurer le guidage en rotation de cet élément de sortie (14) du pré-amortisseur (A2) par rapport à l'élément d'entrée (18) du pré-amortisseur (A2) solidaire en rotation de l'organe multifonction (33).

9. Embrayage à friction selon la revendication 8, **caractérisé en ce que** l'organe d'entrée (18) du pré-amortisseur (A2) comprend une extrémité opposée axialement à l'organe multifonction (33) couplée en rotation, par exemple par crabotage, avec une bague (34) de guidage en rotation de l'élément de sortie (14) du pré-amortisseur (A2) par rapport à l'élément d'entrée (18) du pré-amortisseur (A2).

10. Embrayage à friction selon l'une quelconque des revendications précédentes, **caractérisé en ce que** chaque amortisseur (A2 , A1) comporte des organes élastiques (36a, 36b, 38a, 38b, 20a, 20b, 22a, 22b) à effet circonférentiel logés dans des fenêtres (40, 44 , 24, 26) ménagées dans les rondelles de guidage (32a, 32b , 16a, 16b) et le voile (35 , 15), et **en ce qu'**au moins un des organes élastiques (36a, 36b, 38a, 38b , 20a, 20b, 22a, 22b) est logé avec un jeu circonférentiel dans une fenêtre (44, 26) correspondante du voile (35 , 15), de manière à constituer des premier et second étages d'amortissement.

11. Embrayage à friction selon la revendication 10, **caractérisé en ce que** les moyens de frottement de chaque amortisseur (A2, A1) comportent une rondelle de frottement (52, 31) munie de deux pattes (52p, 31 p) qui, lorsque l'organe élastique (38a, 38b, 22a, 22b) à jeu circonférentiel est au repos, sont chacune liée angulairement avec une extrémité de cet organe élastique (38a, 38b, 22a, 22b) à jeu circonférentiel, de façon à ce que cette rondelle de frottement (52, 31) soit entraînée en rotation lorsque le second étage d'amortissement est activé.

12. Embrayage à friction selon la revendication 11, **caractérisé en ce que** chaque patte (52p) de la rondelle de frottement (52) du pré-amortisseur (A2) interdit tout contact direct du voile (35) du pré-amortisseur (A2) avec l'extrémité de l'organe élastique (38a, 38b) avec laquelle la patte (52p) est liée angulairement.

13. Embrayage à friction selon l'une quelconque des revendications précédentes, **caractérisé en ce que** les moyens de frottement de l'amortisseur principal (A1) comprennent au moins une rondelle (28a, 28b) de frottement plane, munie de pattes de solidarisation en rotation avec l'élément de sortie (18) de l'amortisseur principal (A1) prolongeant radialement le contour interne de cette rondelle plane (28a, 28b).

14. Embrayage à friction selon la revendication 13, **caractérisé en ce que** la rondelle de frottement plane (28a, 28b) est en contact avec le voile (15) de l'amortisseur principal (A1), et est délimitée par une face de frottement avec ce voile (15).

15. Embrayage à friction selon les revendications 11 et 14 prises ensemble, **caractérisé en ce que** la rondelle de frottement plane (28a, 28b) est en contact avec la rondelle de frottement à pattes (31), et est délimitée par une face qui est en contact de frottement avec cette rondelle à pattes lorsque le second étage d'amortissement de l'amortisseur principal (A1) est activé.

16. Embrayage à friction selon l'une quelconque des revendications précédentes, **caractérisé en ce que** les deux rondelles de guidage (16a, 16b) de l'amortisseur principal (A1) sont solidaires de l'élément de sortie (18) de cet amortisseur principal (A1), les deux rondelles de guidage (32a, 32b) du pré-amortisseur (A2) étant disposées axialement à l'extérieur de l'espace compris entre les deux rondelles de guidage (16a, 16b) de l'amortisseur principal (A1).

17. Embrayage à friction selon l'une quelconque des revendications précédentes, **caractérisé en ce qu'**il comporte une rondelle élastique (48) intercalée axialement entre le pré-amortisseur (A2) et l'amortisseur principal (A1), susceptible d'appliquer une charge sollicitant l'organe multifonction (33) en appui frottant contre le voile (35) du pré-amortisseur (A2), et participant au positionnement axial de l'amortisseur principal (A1).

18. Embrayage à friction selon la revendication 17, **caractérisé en ce que** la rondelle élastique (48) entoure l'élément de sortie (14) du pré-amortisseur (A2) et rappelle élastiquement axialement l'élément de sortie (18) de l'amortisseur principal (A1) en appui, directement ou indirectement, contre une butée de positionnement axial de cet élément de sortie (18) de l'amortisseur principal (A1).

19. Embrayage à friction selon la revendication 18, **caractérisé en ce que** la rondelle élastique (48) est munie de moyens de solidarisation en rotation avec l'organe multifonction (33).

## Claims

1. A friction clutch, in particular for a motor vehicle, of the type comprising two dampers (A1, A2) which are coupled together in series, namely a predamper (A2) and a main damper (A1), each of which has a rotatable input element (12, 18) and a rotatable output element (18, 14), the output element (18) of the main damper (A1) being also the input element (18) of the predamper (A2), wherein each of the two dampers includes two guide rings (16a, 16b, 32a, 32b) which are coupled in rotation to a first element selected from among its input elements (12, 18) and output elements (18, 14), a damper plate (15, 35) which is coupled in rotation to the second one of the said elements, friction means (52, 31, 28a, 28b, 33) which are actuated by relative angular displacement of the damper plate (15, 35) and guide rings (16a, 16b, 32a, 32b), the predamper (A2) further including multi-function means having the following functions:
- centring the guide rings (32a, 32b) of the predamper (A2) with respect to its input element (18), and
- coupling the input element (18) of the predamper (A2) with the guide rings (32a, 32b) of the said predamper (A2), for rotation together.
**characterised in that** the multi-function means comprise a multi-function member (33) which furthermore performs at least one of the following functions:
- guiding the output element (14) of the predamper (A2) in rotation with respect to its input element (18), and
- providing friction for the friction means of the predamper (A2).

2. A friction clutch according to Claim 1, **characterised in that** the multi-function member (33) is of generally annular form, and is substantially coaxial with the input element (18) and output element (14) of the predamper (A2).

3. A friction clutch according to Claim 2, **characterised in that** the multi-function member (33) has a first end which is in contact with the damper plate (35) of the predamper (A2), and which is delimited by a friction face for frictional contact with the damper plate (35).

4. A friction clutch according to Claim 3, **characterised in that** the first end of the multi-function member (33) is disposed axially between the two guide rings (32a, 32b) of the predamper (A2).

5. A friction clutch according to any one of Claims 2 to 4, **characterised in that** the input element (18) and output element (14) are of generally annular forms, defining an outer hub (18) and an inner hub (14) respectively, the said hubs being substantially coaxial, and having the multi-function member (33) interposed radially between them, whereby to provide centring for the output element (14) of the predamper (A2) with respect to its input element (18).

6. A friction clutch according to any one Claims 2 to 5, **characterised in that** at least one of the guide rings (32a, 32b) and the input element (18) have internal contours adapted for securing them in rotation and for cooperating with complementary external contours of the multi-function member (33).

7. A friction clutch according to Claim 6, **characterised in that** the contour of the multi-function member (33) for securing it in rotation with the input element (18) extends axially outside the space defined between the two guide rings (32a, 32b) of the predamper (A2).

8. A friction clutch according to Claim 6 or Claim 7, **characterised in that** the multi-function member (33) and the output element (14) of the predamper (A2) are delimited by complementary surfaces defining an inner bearing and an outer bearing respectively, for ensuring that the said output element (14) of the predamper (A2) is guided in rotation with respect to the input element (18) of the predamper (A2) which is coupled for rotation with the multi-function member (33).

9. A friction clutch according to Claim 8, **characterised in that** the input element (18) of the predamper (A2) has an end which is opposed axially to the multi-function member (33) and which is coupled in rotation, for example in a dog clutch relationship, with a guide ring for guiding the output element (14) of the predamper (A2) in rotation with respect to the input element (18) of the predamper (A2).

10. A friction clutch according to any one of the preceding Claims, **characterised in that** each damper (A2, A1) includes elastic members (36a, 36b, 38a, 38b, 20a, 20b, 22a, 22b) acting circumferentially and mounted in windows (40, 44, 24, 26) formed in the guide rings (32a, 32b, 16a, 16b) and the damper plate (35, 15), and **in that** at least one of the resilient members (36a, 36b, 38a, 38b; 20a, 20b, 22a, 22b) is mounted with a circumferential clearance in a corresponding window (44, 26) of the damper plate (35, 15), whereby to constitute first and second damping stages.

11. A friction clutch according to Claim 10, **characterised in that** the friction means of each damper (A2, A1) include a friction ring (52, 31) having two lugs (52P, 31 P) each of which, when the resilient member (38a, 38b, 22a, 22b) having a circumferential clearance is in a rest position, is in circumferential engagement with one end of the said resilient member (38a, 38b, 22a, 22b) having circumferential clearance, whereby the said friction ring (52, 31) is driven in rotation when the second damping stage is activated.

12. A friction clutch according to Claim 11, **characterised in that** each lug (52P) of the friction ring (52) of the predamper (A2) prevents any direct contact taking place between the damper plate (35) of the predamper (A2) and the end of the resilient member (38a, 38b) with which the lug (52P) is in circumferential engagement.

13. A friction clutch according to any one of the preceding Claims, **characterised in that** the friction means of the main damper (A1) comprise at least one flat friction ring (28a, 28b) having lugs for securing it in rotation with the output element (18) of the main damper (A1) and radially extending the length of the internal contour of the said flat ring (28a, 28b).

14. A friction clutch according to Claim 13, **characterised in that** the flat friction ring (28a, 28b) is in contact with the damper plate (15) of the main damper (A1), and is delimited by a friction face for frictional contact with the said damper plate (15).

15. A friction clutch according to Claims 11 and 14 taken together, **characterised in that** the flat friction ring (28a, 28b) is in contact with the lug-bearing friction ring (31), and is delimited by a face which is in frictional contact with the said lug-bearing ring when the second damping stage of the main damper (A1) is activated.

16. A friction clutch according to any one of the preceding Claims, **characterised in that** the two guide rings (16a, 16b) of the main damper (A1) are fixed with respect to the output element (18) of the said main damper (A1), the two guide rings (32a, 32b) of the predamper (A2) being disposed axially outside the space defined between the two guide rings (16a, 16b) of the main damper (A1).

17. A friction clutch according to any one of the preceding Claims, **characterised in that** it includes a resilient ring (48) which is interposed axially between the predamper (A2) and the main damper (A1), and which is adapted to apply a force for urging the multi-function member (33) into frictional engagement against the damper plate (35) of the predamper (A2), and which contributes to the axial positioning of the main damper (A1).

18. A friction clutch according to Claim 17, **characterised in that** the resilient ring (48) surrounds the output element (14) of the predamper (A2) and elastically returns the output element (18) of the main damper (A1) axially into engagement, directly or indirectly, against an axial positioning abutment element of the said output element (18) of the main damper (A1).

19. A friction clutch according to Claim 18, **characterised in that** the resilient ring (48) is provided with means for securing it in rotation with the multi-function member (33).

## Patentansprüche

1. Reibungskupplung, insbesondere für Kraftfahrzeuge, umfassend zwei in Serie geschaltete Dämpfer (A1, A2), die als Vordämpfer (A2) und Hauptdämpfer (A1) bezeichnet werden und jeweils mit drehenden Eingangs- (12, 18) und Ausgangs-Elementen (18, 14) versehen sind, wobei das Ausgangselement (18) des Hauptdämpfers (A1) das Eingangselement (18) des Vordämpfers (A2) bildet, wobei jeder der beiden Dämpfer zwei drehfest mit einem ersten Element der Eingangs- (12, 18) und Ausgangs-Elemente (18, 14) verbundene Führungsscheiben (16a, 16b, 32a, 32b), einen drehfest mit dem zweiten dieser Elemente verbundenen Flansch (15, 35), sowie durch eine Relativverdrehung zwischen dem Flansch (15, 35) und den Führungsscheiben (16 a, 16b, 32a, 32b) beaufschlagte Reibmittel (52, 31, 28a, 28b, 33) umfasst, wobei der Vordämpfer (A2) außerdem Multifunktionsmittel umfasst, welche die beiden folgenden Funktionen sicherstellen:
- Zentrierung der Führungsscheiben (32a, 32b) des Vordämpfers (A2) im Verhältnis zu seinem Eingangselement (18),
- Drehfeste Verbindung des Eingangselements (18) des Vordämpfers (A2) mit den Führungsscheiben (32a, 32b) dieses Vordämpfers (A2),
**dadurch gekennzeichnet,**
**dass** die Multifunktionsmittel durch ein Multifunktionsorgan (33) gebildet sind, welches zusätzlich mindestens eine der nachfolgenden Funktionen gewährleistet:
- Rotationsführung des Ausgangselements (14) des Vordämpfers (A2) im Verhältnis zu seinem Eingangselement (18),
- Reibung für die Reibungsmittel des Vordämpfers (A2).

2. Reibungskupplung nach Anspruch 1, **dadurch gekennzeichnet, dass** das Multifunktionsorgan (33) eine insgesamt ringförmige Form hat, die in etwa koaxial zu den Eingangs- (18) und Ausgangs-Elementen (14) des Vordämpfers (A2) ist

3. Reibungskupplung nach Anspruch 2, **dadurch gekennzeichnet, dass** das Multifunktionsorgan (33) mit einem ersten Endbereich versehen ist, der mit dem Flansch (35) des Vordämpfers (A2) in Kontakt steht und durch eine Fläche zur Reibung mit diesem Flansch (35) begrenzt ist.

4. Reibungskupplung nach Anspruch 3, **dadurch gekennzeichnet, dass** der erste Endbereich des Multifunktionsorgans (33) axial zwischen die beiden Führungsscheiben (32a, 32b) des Vordämpfers (A2) eingesetzt ist.

5. Reibungskupplung nach einem der Ansprüche 2 bis 4, **dadurch gekennzeichnet, dass** die Eingangs- (18) und Ausgangs-Elemente (14) insgesamt ringförmige Formen haben, welche jeweils in etwa koaxiale äußere (18) und innere (14) Naben bilden, zwischen denen das Multifunktionsorgan (33) radial zwischengeschoben ist, um die Zentrierung des Ausgangselements (14) des Vordämpfers (A2) im Verhältnis zu seinem Eingangselement (18) auszuführen.

6. Reibungskupplung nach einem der Ansprüche 2 bis 5, **dadurch gekennzeichnet, dass** mindestens eine Führungsscheibe (32a, 32b) und das Eingangselement (18) innere Konturen zum drehfesten Verbinden haben, welche mit komplementären äußeren Konturen des Multifunktionsorgans (33) zusammen wirken.

7. Reibungskupplung nach Anspruch 6, **dadurch gekennzeichnet, dass** die Kontur des Multifunktionsorgans (33) für die drehfeste Verbindung mit dem Eingangselement (18) sich axial außerhalb des Raumes erstreckt, der zwischen den beiden Führungsscheiben (32a, 32b) des Vordämpfers (A2) liegt.

8. Reibungskupplung nach Anspruch 6 oder 7, **dadurch gekennzeichnet, dass** das Multifunktionsorgan (33) und das Ausgangselement (14) des Vordämpfers (A2) durch ein Lager bildende komplementäre innere und äußere Oberflächen begrenzt sind, um die Rotationsführung dieses Ausgangselements (14) des Vordämpfers (A2) im Verhältnis zum Eingangselements (18) des Vordämpfers (A2) zu gewährleisten, welches drehfest mit dem Multifunktionsorgan (33) verbunden ist.

9. Reibungskupplung nach Anspruch 8, **dadurch gekennzeichnet, dass** das Eingangselement (18) des Vordämpfers (A2) einen dem Multifunktionsorgan (33) axial gegenüberliegenden Endbereich umfasst, welcher beispielsweise durch eine Klauenverbindung drehfest mit einem Ring (34) zur Drehführung des Ausgangselements (14) des Vordämpfers (A2) im Verhältnis zum Eingangselement (18) des Vordämpfers (A2) verbunden ist.

10. Reibungskupplung nach einem der vorherigen Ansprüche, **dadurch gekennzeichnet, dass** jeder Dämpfer (A2, A1) umfangsmäßig wirksame elastische Organe (36a, 36b, 38a, 38b, 20a, 20b, 22a, 22b) umfasst, welche in Fenstern (40, 44, 24, 26) angeordnet sind, die in die Führungsscheiben (32a, 32b, 16a, 16b) und den Flansch (35, 15) eingebracht sind, und dass mindestens eines der elastischen Organe (36a, 36b, 38a, 38b, 20a, 20b, 22a, 22b) mit einem Umfangsspiel in einem entsprechenden Fenster (44, 26) des Flanschs (35, 15) angeordnet ist, um erste und zweite Dämpfungsstufen zu bilden.

11. Reibungskupplung nach Anspruch 10, **dadurch gekennzeichnet, dass** die Reibungsmittel jedes Dämpfers (A2, A1) eine Reibungsscheibe (52, 31) umfassen, welche mit zwei Klauen (52p, 31 p) versehen ist, die wenn das mit Umfangsspiel versehene elastische Organ (38a, 38b, 22a, 22b) im Ruhezustand ist, jeweils winkelmäßig mit einem Ende dieses elastischen Organs (38a, 38b, 22a, 22b) mit Umfangsspiel verbunden sind, so dass diese Reibungsscheibe (52, 31) rotatorisch angetrieben wird, wenn die zweite Dämpfungsstufe aktiviert ist.

12. Reibungskupplung nach Anspruch 11, **dadurch gekennzeichnet, dass** jede Klaue (52p) der Reibscheibe (52) des Vordämpfers (A2) jeden direkten Kontakt des Flanschs (35) des Vordämpfers (A2) mit dem Ende des elastischen Organs (38a, 38b) verhindert, mit welchem die Klaue (52p) winkelmäßig verbunden ist.

13. Reibungskupplung nach einem der vorherigen Ansprüche, **dadurch gekennzeichnet, dass** die Reibungsmittel des Hauptdämpfers (A1) mindestens eine ebene Reibungsscheibe (28a, 28b) umfassen, die mit Klauen zur drehfesten Verbindung mit dem Ausgangselement (18) des Hauptdämpfers (A1) versehen sind, welche die innere Kontur dieser planen Scheibe (28a, 28b) radial verlängern.

14. Reibungskupplung nach Anspruch 13, **dadurch gekennzeichnet, dass** die ebene Reibungsscheibe (28a, 28b) in Kontakt mit dem Flansch (15) des Hauptdämpfers (A1) ist und durch eine Fläche zur Reibung mit diesem Flansch (15) begrenzt wird.

15. Reibungskupplung nach Anspruch 11 in Kombination mit Anspruch 14, **dadurch gekennzeichnet, dass** die ebene Reibungsscheibe (28a, 28b) in Kontakt mit der mit Klauen versehenen Reibungsscheibe (31) ist, und durch eine Fläche begrenzt wird, welche in Reibungskontakt mit dieser mit Klauen versehenen Scheibe ist, wenn die zweite Dämpfungsstufe des Hauptdämpfers (A1) aktiviert ist.

16. Reibungskupplung nach einem der vorherigen Ansprüche, **dadurch gekennzeichnet, dass** die zwei Führungsscheiben (16a, 16b) des Hauptdämpfers fest mit dem Ausgangselemente (18) dieses Hauptdämpfers (A1) verbunden sind, wobei die zwei Führungsscheiben (32a, 32b) des Vordämpfers (A2) axial außerhalb des Raums angeordnet sind, welcher zwischen den beiden Führungsscheiben (16a, 16b) des Hauptdämpfers (A1) liegt.

17. Reibungskupplung nach einem der vorherigen Ansprüche, **dadurch gekennzeichnet, dass** er eine axial zwischen den Vordämpfer (A2) und den Hauptdämpfer (A1) eingeschobene elastische Scheibe (48) umfasst, die zum Aufbringen einer Last geeignet ist, welche das Multifunktionsorgan (33) in Reibanlage gegen den Flansch (35) des Vordämpfers (A2) beaufschlagt und an der axialen Positionierung des Hauptdämpfers (A1) mitwirkt.

18. Reibungskupplung nach Anspruch 17, **dadurch gekennzeichnet, dass** die elastische Scheibe (48) das Ausgangselement (14) des Vordämpfers (A2) umgibt und elastisch das Ausgangselement (18) des Hauptdämpfers (A1) axial in direkte oder indirekte Anlage gegen einen axialen Positionierungsanschlag für dieses Ausgangselement (18) des Hauptdämpfers (A1) zurückstellt.

19. Reibungskupplung nach Anspruch 18, **dadurch gekennzeichnet, dass** die elastische Scheibe (48) mit Mitteln zur drehfesten Verbindung mit dem Multifunktionsorgan (33) versehen ist.
